# EUROPÄISCHE PATENTSCHRIFT

(11) **EP 1 640 891 B1**
(45) Veröffentlichungstag und Bekanntmachung des Hinweises auf die Patenterteilung: **13.02.2013**
(21) Anmeldenummer: 04104734.1
(22) Anmeldetag: 28.09.2004
(51) Int. Cl.: G01S 13/75, G01S 5/02, G06K 17/00

(54) **Verfahren zur Leitung eines Benutzers eines Mobilgerätes von einem aktuellen Standort aus bis zu einem Produkt**
Method of guiding a mobile device user from a predetermined location to a product
Méthode pour guider l'utilisateur d'un dispositif portable d'un endroit prédéterminé vers un article

(43) Veröffentlichungstag der Anmeldung: 29.03.2006
(73) Patentinhaber: Swisscom AG, 3050 Bern (CH)
(72) Erfinder: Ritter, Rudolf, 3052, Zollikofen (CH)
(74) Vertreter: P&TS SA (AG, Ltd.)

(56) Entgegenhaltungen:
- WO-A-01/06401
- US-A1- 2003 095 032
- US-A1- 2003 227 392

## Beschreibung

Die Erfindung betrifft ein Verfahren zur Leitung eines Benutzers eines Mobilgerätes von einem aktuellen Standort aus bis zu einem Produkt nach dem Oberbegriff des Patentanspruchs 1.

Heutzutage werden viele Produkte auf dem Markt z.B. in Websites zum Verkauf inseriert und sind durch Online-Bestellung und -Bezahlung und durch eine eventuell anschliessende Lieferung erhältlich. Es kann auch passieren, dass ein Interessent (potentieller Kunde) das Produkt möglichst bald braucht und eine Lieferung aus einer Verkaufstelle zeitlich zu anspruchsvoll ist, so dass eine persönliche Abholung des Produktes im Geschäft sinnvoller wäre. Es kann auch sein, dass nicht alle Kategorien, Preise, Aktualisierungen, usw. von Produkten angezeigt werden, so dass ein Besuch des Geschäfts empfehlenswert bleibt, um anhand einer gewünschten Produktart das richtige Produkt aufzufinden.

Möchte der Interessent die Fahrtkosten bis zum Geschäft möglichst tief halten, kann allerdings eine umständliche Suche anfangen, da z.B. die Adresse oder die Telefonnummer des Geschäfts geändert hat oder eine gute Standortbeschreibung des Geschäfts nicht verfügbar ist, etc. Zur Behebung solcher Probleme muss der potentielle Kunde mit Gelben Seiten, Auskunftsdiensten, elektronischen Strassen-Routern oder ggf. noch weniger geeigneten, eventuell veralteten Landkarten oder Stadtplänen seinen Weg finden.

Ein weiteres Problem kann ebenfalls bei der Ankunft im Geschäft entstehen, da je nach Grösse oder Struktur des Geschäfts eine umfangreiche Suche nach dem Produkt erforderlich ist, insbesondere wenn wenig Bedienungspersonal vorhanden ist.

Endlich in der Nähe des Produktes erfährt dann der potentielle Kunde möglicherweise, dass das Produkt ausverkauft ist. Noch ärgerlicher ist es, wenn er erfährt, dass noch ein einziges Produkt vorrätig, jedoch im Geschäft nicht auffindbar ist.

Nun bleibt die Alternative ein anderes ähnliches Produkt zu suchen, in der Hoffnung, dass dieses auch passen wird. Da zuwenig oder kein Bedienungspersonal vorhanden ist, ist eine sofortige Beratung ausgeschlossen. Der auf sich selbst gestellte Kunde muss also jede Produktekategorie ansehen, um ggf. eine gute Wahl zu treffen bzw. gar nichts finden. Dabei geht dem potentiellen Kunden wertvolle Zeit verloren. Letztendlich hätte der Interessent am liebsten ein anderes Geschäft besucht, jedoch wäre dieses vielleicht zu weit entfernt angesichts des bevorstehenden Ladenschlusses. Eine weitere geographische Recherche wäre nötig da der Kunde vielleicht nicht genau weiss, wo das Geschäft liegt und wie man am schnellsten hinfahren könnte.

US2003095032A1 offenbart ein System, in dem Produkte mit einem Tag ausgestattet sind. Der Benutzer ruft mit seinem Mobiltelefon den Tag ab und erhält nach Konsultation einer Datenbank Produktinformation, die neben anderen Informationen auch den Verkaufsort (Geschäft, etc.) enthalten können. In einer Ausführungsform erhält der Benutzer eine Karte, um den Weg zu einer solchen Verkaufstelle zu finden. Dieses System wird durch ein in das Mobiltelefon integriertes GPS unterstützt.

WO01/06401 offenbart ein spezielles System und Verfahren, um Tags auszulesen, welches in einem Inventarsystem eingesetzt wird.

Aufgabe dieser Erfindung ist es, ein Verfahren zur Leitung eines Interessenten von einem aktuellen Standort aus bis zu einem Produkt anzugeben, bei welchem der Interessent Benutzer eines Mobilgerätes ist und durch welches alle Nachteile des Standes der Technik behoben werden.

Eine Lösung dieser Aufgabe erfolgt durch ein Verfahren mit den Merkmalen des Patentanspruchs 1.

Vorteilhafte Weiterbildungen der Erfindung sind in den Unteransprüchen angegeben.

Der Grundgedanke der Erfindung ist ein Verfahren, ausgehend von einem Verfahren zur Leitung eines Benutzers eines Mobilgerätes von einem aktuellen Standort aus bis zu einem Produkt.

Ein erster Vorteil dieses Verfahrens besteht in der direkten geographischen Leitung des Benutzers von seinem aktuellen Standort aus bis zum Produkt-Abholungsort. Kein Bedienungspersonal wird benötigt, da das Produkt im Geschäft selber sofort durch Aktivierung des RFID-Elements lokalisiert wird, auch wenn sich das Produkt im falschen Regal oder im Lager befindet.

Wurde das Produkt gerade in diesem Moment verkauft oder ggf. gestohlen, wird der Benutzer unverzüglich darüber informiert und braucht seine Zeit nicht im Geschäft zu verlieren.

In diesem Fall kann das erfindungsgemässe Verfahren noch ein weiteres Mal eingeleitet werden, indem der erfolglose Benutzer im jetzigen Geschäft per Mobilgerät eine weitere Leitung bis zu einem weiteren Produkt anfordert. Dabei kann es sich, um ein identisches Produkt handeln oder es kann eine Suche nach einem ähnlichen Produkt sein. Im letzteren Fall kann vielleicht das aktuelle Geschäft über ein ähnliches Produkt verfügen und eine sofortige neue Leitung des Kunden wird durchgeführt. Wenn nicht, wird nach anderen Geschäften gesucht, die das ursprüngliche oder ein ähnliches Produkt anbieten.

Ein Verfügbarkeitstest kann ebenfalls vom Mobilgerät gestartet werden, indem ein interner Inventarserver zur Überwachung präsenter Produkte im neuen Geschäft z.B. unter Nutzung des vorigen oder eines abweichenden Identifizierungscodes in Verbindung mit dortigen registrierten RFID-Elementen abgefragt wird.

Verbindet man diesen Verfügbarkeitstest mit einer bargeldlosen Vorauszahlung des Produkts mittels des Mobilgeräts an ein Zahlungsinstitut des Geschäfts, kann dem Inventarserver eine Reservierung gemeldet werden und ggf das RFID-Element sofort deaktiviert werden, so dass im Extremfall ein in der Zwischenzeit aufgetauchter weiterer Kunde das Produkt an der Kasse zurücklassen muss, damit der erste Kunde das gewünschte Produkt nicht noch einmal verpasst.

Mit grossem derzeitigen und zukünftigen Vorteil werden Mobilgeräte, wie Mobiltelefone oder PDAs (Personal Digital Assistant), immer mehr und leistungsfähigere Funktionen aufweisen oder allgemeiner anbieten, die eine Durchführung aller zuvor beschriebenen Verfahrensschritte einfach und schnell ermöglichen. Z.B. sind schon Positionierungsmittel wie GPS, Galileo, etc. sowie Wegfinder in Mobiltelefonen zur Leitung des Benutzers bis zum Geschäft verwendbar. Ein externes Mobilnetz-basiertes Orientierungsmittel ist dafür auch vorstellbar, z.B. mittels Triangulationssignalen zur Ermittlung des Standorts des Mobiltelefons im Mobilnetz. Weiterhin sind schon Datenübertragungsformate entwickelt, mit welchen der Benutzer des Mobiltelefons über ein Display oder einen Lautsprecher die Leitungsinformationen über das Mobilnetz empfangen kann.

Bei Eintritt in ein bedecktes Geschäft versagen derzeitige GPS-Systeme, die eine möglichst durchsichtige direkte Verbindung mit Satelliten erfordern. Eine geographische Mobilnetz-basierte Orientierung wäre im Geschäft zu teuer zum installieren. Deshalb eignen sich RFID-Elemente sehr gut, die zur Kennzeichnung der Produkte, d.h. auch genau am Produkt befestigt oder zugeordnet sind, verwendet werden. Hierfür kann der Kunde einen RFID-Leser verwenden, mit welchem eine RFID-Element-basierte Wegbeschreibung bis zum Produkt erfolgen wird. Prinzipiell werden aktuelle RFID-Elemente in einer Reichweite von beispielsweise ca. 10m aktiviert und dem RFID-Leser des Benutzers gemeldet. Ist der RFID-Leser am Mobilgerät angeschlossen oder mindestens in Verbindung, kann sogar die Wegbeschreibung mittels herkömmlichen visuellen Darstellungsmitteln am Mobiltelefon angezeigt oder z.B. mittels akustischen Tönen oder mittels einer Stimme wiedergeben werden. Solche RFID-Leser werden mit hoher Wahrscheinlichkeit in Zukunft serienmässig bei Mobiltelefonen vorhanden sein.

Befindet sich nun das Produkt im Geschäft ausserhalb der Reichweite des RFID-Lesegeräts, können RFID-Netz-basierte Suchmittel verwendet werden. Dabei können Suchen aus einem oder mehreren RFID-Elementen gestartet werden, wenn der RFID-Leser keinen Empfang des gesuchten jedoch noch von einem nicht gesuchten RFID-Element hat. Solche Aktivierungen von im Geschäft verteilten RFID-Elementen zur Suche eines weiter entfernten und gezielten RFID-Elements sind bei Ad-Hoc-Netzen bekannt. Dabei können z.B. drei RFID-Elemente, die miteinander kommunizieren können, unterschiedliche miteinander relative Laufzeitdifferenzen von eigenen Testsignalen ermitteln und lassen sich genau, selbstverständlich auch relativ zum Benutzerstandort im Geschäft, lokalisieren. Es können auch Zwischengeräte im Geschäft installiert werden, die eine regelmässige Registrierung der RFID-Elemente übernehmen, damit das Geschäft durch automatische und permanente Inventaranpassungen seinen Warenvorrat kontrollieren kann. Werden die Produkte im Geschäft aus logistischen Gründen bzw. von Kunden selber hin und her transportiert, ist eine Kontrolle des Standorts oder/und der Bewegung aller Produkte möglich. Der Aufwand der Zuordnung der Produkte im Geschäft wird dadurch erleichtert, oder ist nicht mehr erforderlich. Eine falsche logistische Zuordnung eines Produktes in seinem Regal wird ebenfalls zum grossen Vorteil für den suchenden Kunden mit Mobilgerät komplett unproblematisch.

Solche Ad-Hoc-Netze oder Zwischengeräte können bei bargeldloser Vorauszahlung eines Produkts (nach einem Verfügbarkeitstest) ebenfalls eine Inhibierung der Einkaufzulassung dieses Produkts durch fremde Kunden (mindestens provisorisch) initiieren, indem sie z.B. bei Inventardaten zusätzliche Verkaufsverbotsdaten zu dem an der Kasse gelesenen Dateninhalt des RFID-Elements hinzufügen.

Ein Ausführungsbeispiel der Erfindung wird im Folgenden anhand der Zeichnung näher erläutert.

### Dabei zeigt:

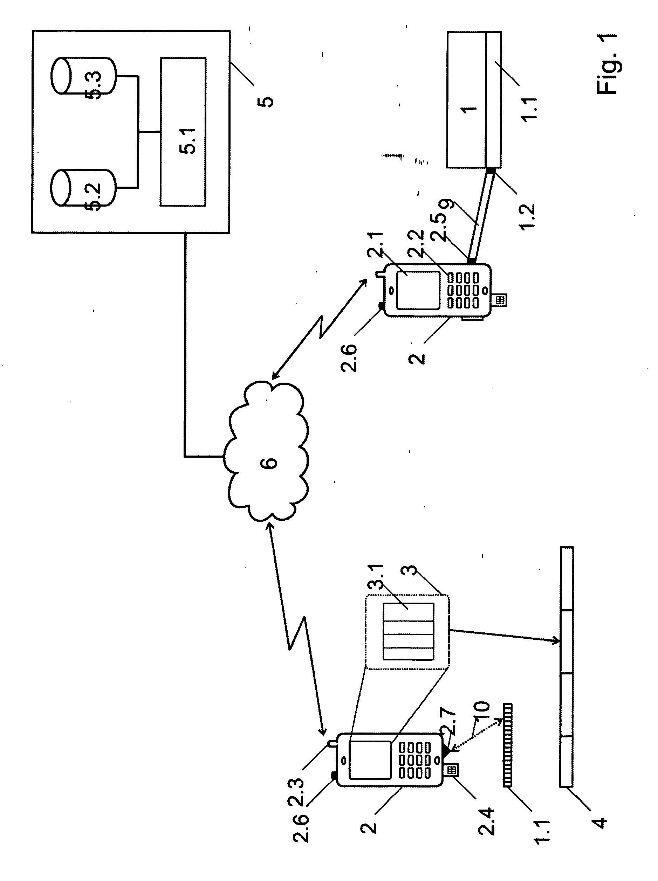

Fig. 1: schematisches Konzept einer Anwendung des erfindungsgemässen Verfahrens.

In Figur 1 wird ein Beispiel zur Leitung eines Benutzers eines Mobilgeräts 2 von seinem aktuellen Standort aus bis zu einem Produkt 1 beschrieben, das bei einem Geschäft abholbar wäre.

Der Benutzer hat im Voraus aus einer Zeitschrift, aus dem Internet oder aus weiteren Medieninformationsquellen einen Identifizierungscode erfasst, z.B. einen elektronischen Produktcode 1.1 (EPC = Electronic Product Code) oder einen Barcode 11. Solche Codes können auch direkt vom Mobilgerät erfasst werden, z.B. drahtlos über eine Infrarot- oder eine Bluetooth-Schnittstelle oder mittels weiterer Erfassungsmittel wie eines optischen Barcode-Lesers 2.7 mit z.B. einem Laserscanner 10 oder einem RFID-Leser 2.5 eines an dem Produkt 1 angebrachten RFID-Elements mit einem Product-Code z.B. einem EPC-Code 1.1 oder einem weiteren aus dem Produkt hergeleiteten Code 1.2. Zur Erfassung solcher Codes können entsprechende Lesergeräte direkt am Mobilgerät angeschlossen werden. In der Zukunft werden auch die meisten Mobilgeräte wie Mobiltelefone mehrere integrierte Lesegeräte aufweisen. Zur Zeit sind beispielsweise schon bei vielen Mobiltelefonen Infrarot-, WLAN- oder/und Bluetooth-Schnittstellen sowie Kameras vorhanden. Ein Identifizierungscode kann auch direkt mit der Tastatur 2.2 des Mobilgeräts 2 eingegeben werden, wie bei herkömmlichen Mobiltelefonen. Selbstverständlich kann der Interessent anstelle eines Mobilgeräts ebenfalls ein anderes (vorzugsweise externes) Erfassungsgerät zum Lesen des Codes verwenden, wie z.B. eine Laserscannereinheit, die an einem Computer zu Hause oder sogar einer Suchstation im Geschäft angeschossen wäre. Alternativ ist auch die Wahl eines Codes aus einer HTML-Seite oder aus einer PML-Seite, d.h. ohne Lesegerät, möglich, falls der Interessent eine Internetrecherche des Produkts 1 beispielsweise bei einer EPC-Suchmaske einer Datenbank durchführen möchte. Diese Internetrecherche kann auch per Mobilgerät erfolgen, falls das Mobiltelefon einen Internetzugang oder WAP-Verbindung zulässt. Dieser Aspekt ist sehr vorteilhaft, falls der Benutzer des Mobiltelefons sein Produkt in einem ersten Geschäft nicht gefunden hat und von dort aus eine weitere Recherche gemäss dem erfindungsgemässen Verfahren einleitet. Darstellungsmittel von Internetseiten am Display eines Mobiltelefons sind zur Zeit Stand der Technik z.B. bei dem Besuch von WEB- oder WAP-Seiten. Schliesslich wird ein Identifizierungscode (wie EPC, Bar-Code...) des Produkts 1 im Mobilgerät erfasst und gespeichert. Eine weitere Option besteht in der Abspeicherung mehrerer Identifizierungscodes, falls der Interessent zu mehreren Produkten wie bei einer Einkaufsliste oder zu einem Produkt aus einer Produktkategorie geführt sein möchte. Diese Codes können danach zu einem Namenserver übermittelt werden.

Nach der Erfassung des elektronischen Identifizierungscodes 1.1 und falls dieser Code den geographischen Standort eines Geschäfts angibt, kann die Leitung des Interessenten bis zum Geschäft beginnen, z.B. durch Aktivierung eines Wegleitungsmittels (z.B. mit GPS, Galileo, Mobilnetz-basiertes Lokalisationssystem...) im Mobilgerät.

Verfügt der Identifizierungscode (z.B. ein EPC-Code) über keine explizite geographische Daten des Produkts, wird dieser zu einem Server 5 vermittelt. Die Vermittlung kann aus dem Mobilgerät über ein Mobilfunknetz 6 wie GSM, GPRS, HSCD, EDGE, UMTS usw. oder über ein Festnetz bei Verwendung eines am Modem angeschlossenen Internetfestzugangs (über telefonisches Festnetz, Powerline-Netz, Kabel TV-Netz, etc) erfolgen.

Eine Anwendung im Mobilgerät kann eine Bestätigung des Benutzers verlangen, bevor der Code weiterbehandelt wird und die gewünschten geographischen Daten des Geschäfts wiedergegeben werden. Diese Bestätigung kann beispielsweise über die Tastatur des Mobilgeräts, wie eines PDAs, über andere Eingabemittel oder mit einem Sprachbefehl gegeben werden.

Ist das Passwort korrekt und wird die Bestätigung erhalten, wird der gelesene Code 1.1 von der Anwendung in einer Meldung (zum Beispiel in einer Kurzmeldung oder vorzugsweise in einem GPRS- oder UMTS-Paket) verpackt und über das Mobilfunknetz 6 an einen Server 5 an eine bekannte Adresse gesendet, vorzugsweise einen Server innerhalb der Infrastruktur des Mobilfunknetzes 6. Die Meldung wird optional vom Mobilgerät 2 oder von einer mit dem Mobilgerät 2 verbundenen SIM-Karte 2.4 signiert und/oder mit einem Zeitstempel versehen.

Der Server 5 verwaltet Meldungen mit Codes, die von mehreren oder möglicherweise allen RFID-Lesern 2.5 unterschiedlicher potentieller Kunden (=Benutzer von Mobilgeräten) empfangen werden. Andere, komplexere Filter können im Server 5 vorgesehen werden, um Codes aus unterschiedlichen Bereichen verschieden oder gar nicht zu behandeln.

Der Server 5 kann auch die Identität des Benutzers prüfen. Dies ist umso zuverlässiger, wenn der Server 5 vom Betreiber des Mobilfunknetzes 5 verwaltet wird. In diesem Fall kann die Identität des Mobilteilnehmers beispielsweise anhand der IMSI (International Mobile Subscriber Identity) oder einer anderen Identität in der SIM-Karte zuverlässig ermittelt werden. Auf diese Weise können benutzerabhängige Informationen wiedergegeben werden, beispielsweise Hinweise, die vom Profil und den Präferenzen des Benutzers abhängig sind.

Der Server 5 ist über Internet oder ein Intranet mit einem Namendienstserver 5.2 verbunden, in welchem für jeden Code eine entsprechende elektronische Adresse einer elektronischen Seite abgelegt ist.

Eine Anfrage mit dem gerade empfangenen Code wird vom Server 5 an den Namendienstserver 5.2 geleitet, der mit einer entsprechenden elektronischen Adresse antwortet. Die elektronische Adresse besteht beispielsweise aus einem URL oder einer anderen Adresse für ein TCP-IP Netz.

Der Namendienstserver 5.2 kann vom Betreiber 5.1 des Servers 5 verwaltet werden und/oder von externen Entitäten (beispielsweise von einer Organisation, die die Codes 1.1 an verschiedene Firmen verteilt). Mehrere Namendienstserver 5.2 können miteinander verbunden werden, so dass die gewünschte Adresse in einem anderen Namendienstserver gesucht wird, wenn sie sich nicht im Server 5 befindet. Dies erlaubt zum Beispiel einem Mobilfunknetzbetreiber, auch Codes von anderen Organisationen zu bearbeiten.

Der Benutzer des Mobilgeräts 2 kann somit alle Codes von allen Produktherstellern stets an den gleichen Zielserver 5 richten, der aus dem Namendienstserver 5.2 oder dem Netz von Namendienstservern 5.2 die Adresse der Seite, aus welcher der gewünschte geographische Standort oder weitere Informationen heruntergeladen werden können, ermittelt.

Die Verknüpfung im Namendienstserver 5.2 zwischen einem Code 1.1 und einer Adresse kann vorzugsweise vom Anbieter der gewünschten Dienstleistung jederzeit geändert werden (beispielsweise über ein dediziertes WEB-Formular). Dies erlaubt, die elektronische Adresse einer Seite oder eines Domains zu ändern, ohne die Endbenutzer informieren zu müssen.

Die Adresse der Seite, auf welcher sich die geographische Information des Geschäfts befindet, kann somit eindeutig allein anhand der 64- oder 96-Bits-Codes, die im RFID-Element 1.2 gespeichert sind, gefunden werden; die Seite, auf welche zugegriffen wird, ist somit völlig unabhängig von der Adresse oder Telefonnummer des Servers 5. Da viele Produkte 1 markiert werden müssen, und da nicht alle Codes 1.1 verwendet werden können, müssen genügend frei verfügbare Bits für die Codes vorgesehen werden, einfache IP-Nummern zum Beispiel, würden möglicherweise nicht ausreichen, da sehr viele mögliche Kombinationen bereits zugeteilt worden sind. Es wird vorzugsweise ein anderes, selbständiges Seiten-Adressierungssystem (z.B. das EPC-System) verwendet.

Der Server 5 empfängt die Antwort vom Namendienstserver 5.2 mit der gewünschten Seitenadresse und greift auf die entsprechende Seite im weiteren Server 5.3 zu, oder auf ein Netz mit mehreren lokalen oder fernen Servern (mit weiteren Anfragen und Antworten).

In einer Variante ergibt sich die Adresse der gewünschten Seite aus einer Kombination der vom Namendienstserver 5.2 angegebenen Adresse mit einem oder mehreren Bits des Codes 1.1. In diesem Fall entspricht die Adresse im Namendienstserver 5.2 einem Bereich, in welchem die individuellen Seiten bestimmten Teilen der Codes entsprechen. Dies hat den Vorteil, dass der Namendienstserver 5.2 einfacher gestaltet werden kann.

Die Seite im Server 5.3, auf welche der Server 5 zugreift, umfasst möglicherweise einen Hypertext-Inhalt in einer Markup Sprache. In einer Variante umfasst diese Seite einen XML-Inhalt (eXtended Markup Language). In einer anderen Variante umfasst die Seite einen PML-Inhalt (Product Markup Language). Die Seite kann auch SOAP-Protokol (Simple Object Access Protocol) .NET- Framework oder andere Web-Dienste unterstützen, mit welchen der Server 5 und schlussendlich das Mobilgerät 2 auf Dienste und Objekte des weiteren Servers 5.3 zugreifen kann, aus welchen die gewünschten geographischen Informationen des Geschäfts ermittelbar sind.

Der Server 5 lädt die gewünschte Seite, oder einen Teil der Seite, aus dem weiteren Server 5.3 fern, und leitet sie dem Mobilgerät 2 weiter. Wie wir es später beschreiben werden, kann die Seite auf dem weiteren Server 5.3 auch einen multimedialen Inhalt umfassen, um beispielsweise geographische Information oder Leitungshinweise auch akustisch oder mit Bildern wiederzugeben. Es ist auch möglich, dass die gewünschten Informationen über mehrere Seiten verteilt sind, die miteinander beispielsweise mit Links verbunden werden können, so dass der Benutzer mehr Informationen über ein Produkt durch Anklicken oder die Anwahl von Links oder Menuoptionen fernladen kann.

Die gewünschte Information des Standorts des Produkts kann von innerhalb des Mobilfunknetzes 6 und/oder des Mobilgeräts 2 ermittelten Parametern, einschliesslich von der Identität des Benutzers des Mobilgeräts 2, von seinem Vertragstyp, von seinem Standort, von der Zeit, vom besuchten Netz und von seinem Profil, usw. abhängig sein. Die Sprache des ermittelten Inhalts kann vom Standort des Benutzers und/oder von seinem vorher abgelegten Profil abhängig sein.

Die gewünschte Information kann über einen Rückkanal, beispielsweise als Meldung (SMS, MMS, USSD, oder E-Mail) oder als Web- oder Wap-Seite an das Mobilgerät 2 und/oder an die SIM-Karte 2.4 übertragen werden. In einer Ausführungsform wird u. a. der Standort des Geschäfts mit der Wegbeschreibung aus dem aktuellen Standort des Benutzers wiedergegeben, beispielsweise vom Display des Mobilgeräts 2. In diesem Fall können Daten der Standortkoordinaten des Geschäfts in dem weiteren Server 5.3 abgelegt werden, die in Verbindung mit dem aktuellen Standort des Benutzers zur Erzeugung der Wegbeschreibung dienen werden.

Die Standortkoordinaten des Geschäfts können dem Benutzer auch innerhalb einer Session mit mehreren Benutzeranfragen und entsprechenden Antworten kommuniziert werden. In einer Ausführungsform wird im Server 5 oder im weiteren Server 5.3 eine Angabe abgelegt, dass die gewünschte Information an den Benutzer gesendet worden ist, um dies später auch beweisen zu können. Diese Angabe kann elektronisch unterzeichnet und mit einem Zeitstempel versehen werden.

Folgende gewünschte Informationen zur Leitung des Benutzers bis zum Produkt werden auf einer Seite im weiteren Server 5.3 abgelegt und über das Mobilfunknetz 6 an das Mobilgerät 2 übertragen:
- Standort (Weltkoordinaten, Adresse, Land) des Geschäfts mit dem gewünschten Produkt (daraus kann, bei Kenntnis des Standorts des Mobilgeräts eine Entfernung zwischen Benutzer und Standort dynamisch ermittelt und mit dem Mobilgerät angezeigt werden).
- Kontaktdaten des Geschäfts: Telefon-, Fax-Nummer, E-Mail, Webseite, Katalog mit Referenzen (auch als Barcode, EPC-Code von RFID-Elementen) von Produkten oder Produktkategorien, Abteilungen, Personen, usw.
- Öffnungszeiten des Geschäfts.
- Produktbetreffende Daten, wie eine berechnete Verfügbarkeit des/der Produkte (Anzahl der verbleibenden Produkte im Geschäft, evtl. mit RFID-Codeliste), einen Preis des Produktes, ein Produktsalter bzw. eine Konsumzeitgrenze...
- Möglichkeit zur (evtl. mit Mobilgerät ferngesteuerten) Reservierung bzw. (evtl. mit Mobilgerät ferngesteuerten) Vorauszahlung eines Produkts.
- Möglichkeit zur (evtl. mit Mobilgerät ferngesteuerten) Vorbereitung eines Einkaufkorbs eines oder mehrerer Produkte, z.B. zur schnelleren Abholung im Geschäft.
- Zugelassene Zahlungsmittel im Geschäft bzw. Möglichkeit einer bargeldlosen (evtl. mit Mobilgerät ferngesteuerten) Bezahlung.
- Allgemeine Geschäftsbedingungen (AGB) des Geschäfts und evtl. des Produktherstellers.

Weitere Informationen können auf der Seite des Servers 5.3 gespeichert werden und immer zugreifbar bleiben.

Aus einem gelesenen Barcode eines Produkts in einer Zeitung oder im Internet können auch mehrere EPC-Codes von Produkten derselben Produktkategorie zugewiesen werden (z.B. ein Code für eine Weinkategorie, wobei jede Weinflasche dieser Kategorie ihren eigenen EPC-Code besitzt). In diesem Fall wird dem Benutzer beim Zugriff auf die Weinkategorie mittels eines gelesenen Barcodes ein EPC-Code zugewiesen. Möchte nun der Benutzer dieses Produkt, nicht aber das Nachbarprodukt der Kategorie erhalten, verlangt er mit seinem Mobilgerät die Auswahl eines neuen EPC-Codes (einer anderen Weinflasche der Weinkategorie). Diese Umtauschaktion eines EPC-Codes könnte mit dem Mobilgerät 2 des Benutzers initiiert werden und im Server 5.3 erfolgen, wo alle EPC-Codes innerhalb bestimmter Kategorien gesammelt werden.

Auf ähnliche Weise kann der Server 5.3 Produkte unterschiedlicher Hersteller und dementsprechenden EPC-Codes in Kategorien (wie z.B. Auto, Kaffeemaschine, Rotwein...) einordnen oder mindestens eine Verbindung zwischen Seiten dieser Produkte nach Kategorien (wie Auto, Kaffeemaschine, Rotwein...) gemäss gewünschten Kriterien (wie Preis, Grösse, Leistung, Menge...) machen. Damit kann der Benutzer des Mobilgeräts 2 anhand einer Grundvorstellung des gewünschten Produkts eine feinere Wahl treffen, bevor er beispielsweise zu einem Geschäft mit einem evtl. für ihn veralteten Produkt hingeht. Dasselbe gilt im Geschäft selber, wobei ein EPC-Code-Wechsel zwischen zwei Produkten oder einer EPC-Code-Palette mehrerer Produkte an das Mobilgerät versandt werden können. Dieser Aspekt ist besonders wichtig, wenn sich der Kunde über mehrere Produkte informieren möchte oder wenn sich der Kunde in letzter Sekunde für ein anderes Produkt entscheidet.

Nach Versand des Identifizierungscodes vom Standort des Benutzers des Mobilgeräts aus an den Server 5 mit dem Namenserver 5.2 wird der Identifizierungscode des gewünschten Produkts im Mobilgerät gespeichert. Eine Alternative ist vorstellbar, wenn der Namenserver 5.2 oder der weitere Server 5.3 andere produktbetreffende Daten anstelle oder zusätzlich zum Identifizierungscode an das Mobilgerät zurücksendet. Am Display des Mobilgeräts kann der Benutzer z.B. mittels graphischer oder Text-Menüs einen oder mehrere Codes oder Daten anwählen. Z.B. für EPCbasierte Identifizierungscodes werden EPC-Suchmasken 4 direkt am Display 3 angezeigt. Damit kann der Benutzer ein Produkt oder eine Produktkategorie auswählen sowie auch den Standort des Geschäfts, wohin er zum Einkauf des Produkts gehen möchte.

Zur Auswahl des Standorts des Geschäfts können im Mobilgerät unterschiedliche Wahlparameter bezüglich eines Produkts oder einer Produktkategorie aus dem Server 5 bzw. aus PML-Seiten angezeigt werden. Als Wahlparameter sind z.B. die Entfernung zwischen Mobilgerät und Geschäft, Preis des Produktes, usw. zu verstehen.

Möchte der Besitzer des Mobilgeräts eine Liste von Identifizierungscodes gesuchter Produkte im Mobilgerät erfassen, kann eine Liste mit einer minimalen Zahl von produktbetreffenden Standorten, die über einige dieser Produkte verfügen, aus dem Namenserver geladen wird.

Wird eine Liste von Identifizierungscodes gesuchter Produkte im Mobilgerät erfasst, kann eine Liste von Standorten, die über einige dieser Produkte verfügen, z.B. sortiert nach den günstigsten produktbetreffenden Preisangeboten aus dem Namenserver geladen werden. Weitere Auswahlkriterien, der Standorte (Geschäfte) können hier verwendet werden, wie beispielsweise eine minimale gesamte Fahrtstrecke über alle Geschäfte oder einen Weg, der lediglich die U-Bahn und keinen Strassenverkehr anbietet. Es kann auch nach dem Standort gesucht werden, bei welchem die meisten Produkte in der Liste am günstigsten sind und/oder wo Parkplätze für Autos zur Verfügung stehen. Bei mehreren Geschäften können dazu weitere Verfügbarkeitskriterien von Produkten auf der Liste einbezogen werden. Eine empfohlene Streckenbeschreibung von einem Geschäft zu einem oder mehreren anderen Geschäften kann auch gemäss bestimmten Auswahlkriterien (z.B. keine Autobahnstrecke, nur Landstrasse, keine U-Bahn aber nur Buslinie sowie minimale Strecken zwischen Geschäften oder kreisförmiger Durchlauf zwischen Haus, erstem Geschäft, zweiten Geschäft, etc, letzten Geschäft und wieder zu Hause usw.).

Meistens wird ein Benutzer eines Mobilgeräts regelmässige Einkäufe machen. Daher ist es auch sinnvoll, ein Benutzerprofil von Auswahlkriterien beispielsweise im Mobilgerät (z.B. mit cookies) oder in einem Server oder einer Datenbank zu speichern. Damit werden gewünschte Produkte sowie dazugehörige Auswahlkriterien einfach mehrmals verwendet, wie der Kunde es sich gewöhnlich wünscht. Z. B. wird nach einem Getränke-Markt nur in einer Umgebung von 10 km von der Wohnung des Benutzers, wo man ein Auto direkt vor dem Eingang zur Aufladung der Ware parken kann und bei welchem eine Zahlung mit Kreditkarte möglich ist gesucht. Zusätzliche Auswahlkriterien wie z.B. der Name einer bevorzugten Supermarkt-Kette können beispielsweise als weiteres Profil für dieselbe oder andere gesuchte Produkte hinzugefügt werden.

Nach Selektion des/der Wahlparameter (d.h. das gewünschte Geschäft ist jetzt im Mobilgerät bekannt) kann der Benutzer des Mobilgeräts seinen Weg zum Geschäft beginnen. Der Weg kann aus der Standortinformation z.B. aus einer PML-Seite des Geschäfts im Server 5 und den aktuellen Weltkoordinaten des Mobilgeräts im Mobilgerät oder mit einem zusätzlichen Navigationsmodul berechnet werden. Aktuelle Navigationssysteme (wie GPS, Galileo oder Mobilnetz-basierte Orientierungssysteme) sind auch an Mobilgeräte anschliessbar oder darin integriert. Die Daten der Wegbeschreibung können auch vom Mobilgerät an das Navigationssystem eines Autos übertragen werden.

Bei Ankunft des Benutzers des Mobilgeräts im Geschäft wird das Mobilgerät 2 mit einem RFID-Leser 2.5 die Navigation des Benutzers bis zum Produkt 1 ermöglichen.

Das Mobilgerät 2 umfasst einen RFID-Leseteil 2.5, oder ist mit einem solchen Leseteil verbunden (beispielsweise über eine USB, Firewire, PCCard, Compactflash, proprietäre, usw, Verbindung, oder über eine Bluetooth oder WLAN-kontaktlose Verbindung). Der Leseteil 2.5 umfasst einen Mikrokontroller und mindestens eine Antenne oder Spule, um kontaktlos Daten mit RFID-Komponenten in der unmittelbaren Nähe auszutauschen. Die Datenübertragung erfolgt beispielsweise im Frequenzbereich 13,56MHz, 900MHz und/oder 860-930MHz. Der Leseteil kann vorzugsweise wahlweise in verschiedenen Frequenzbereichen und mit unterschiedlichen RFIDs arbeiten. Die Tragweite beim Lesen der RFIDs beträgt vorzugsweise zwischen 2 und 10 Metern - je nach Orientierung des Leseteils und des Elements. Die Verbindung erfolgt vorzugsweise im Half-Duplex Modus mit einer ASK Backscatter Modulation.

Das Produkt 1 umfasst ein RFID-Element 1.1 mit einem unlöschbaren permanenten Speicherbereich, in welchem während der Herstellung oder während der Personalisierung ein Code abgelegt wird. Der Code entspricht vorzugsweise dem Produkt-Code (z.B. EPC-Code), der im Namenserver abgegeben wurde oder der einen aus diesem Code hergeleiteten Code bildet. Deshalb handelt es sich, um ein Identifizierungscode oder um vom Namenserver vorherigen gelieferten produktbetreffenden Daten, die als beliebiger Code gebildet werden können. Der Code identifiziert vorzugsweise eindeutig jedes bestimmte RFID-Element im Geschäft; jedes RFID-Element hat vorzugsweise einen anderen individuellen Code. Es ist aber auch denkbar, dass der Code nur den Typ des Produkts kennzeichnet, insbesondere wenn der Benutzer des RFID-Lesers eine Produktkategorie oder ein Produkt aus einer Gruppe von identischen Produkten (z.B. Gläser) sucht. Der Code ist vorzugsweise unfälschbar.

Die EPC-Codes umfassen vorzugsweise 64, 96 oder mehr Bits und sind hierarchisch organisiert. Die Antwort des Elements 1.1 an eine Anfrage des Leseteils 2.5 umfasst vorzugsweise einen Vorsatz, Redundante Prüfdaten und den Code. Andere Daten können im Speicherbereich des Chips abgelegt und vom Leseteil 2.5 gelesen werden.

EPC-Codes werden vorzugsweise von einer gemeinsamen Autorität an verschiedene Produkthersteller verteilt; ein Teil des Codes gibt vorzugsweise die Identität des Herstellers des Produkts 1 an. Ein Hersteller, welcher Produkte mit weiteren Hinweisen markieren möchte, reserviert eine Reihe von Codes bei der gemeinsamen Autorität und speichert einen Teil dieser Codes im RFID-Element.

Mindestens eine Anwendung ist im Mobilgerät 2 vorgesehen, um Codes in benachbarten RFID-Elementen über den Leseteil 2.5 zu lesen. Das Lesen eines Codes wird vorzugsweise vom Mobilgerät 2 initiiert; möglich ist beispielsweise, dass das Mobilgerät stets oder periodisch nach benachbarten RFID-Elementen sucht und Codes in gefundenen RFID-Elementen liest und bearbeitet oder weiterleitet. In einer anderen, stromsparenden Variante wird das Lesen vom Benutzer des Mobilgeräts 2 initiiert, der eine entsprechende Anwendung startet oder einen Befehl eingibt, wenn er ein bestimmtes Produkt finden will. Bei Abholung oder Zahlung des Produkts kann das RFID-Element bzw. das Produkt oder dessen Verfügbarkeit gesperrt und erst nach dem Lesen des Codes mit einem Befehl aus einem Fernserver entsperrt werden.

Das Lesen der RFID-Elemente mit dem Mobilgerät 2 oder mit einem anderen Gerät kann auch von einer externen Vorrichtung (zum Beispiel einer Verkaufstelle oder einem Automat) über eine Schnittstelle im Nahbereich (zum Beispiel Bluetooth oder WLAN) über das Mobilfunknetz 6, oder über einen Link auf einer besuchten WEB oder WAP-Seite initiiert werden.

Einfache Filter und Bearbeitungsmittel können als Teil der Anwendung im Mobilgerät 2 und/oder im Leseteil 2.5 vorgesehen werden, um gelesene Codes zu bearbeiten. Die Anwendung kann beispielsweise nur gewisse Bereiche von Codes - z.B. bei gesuchten Produktkategorien - bearbeiten und weiterleiten. Redundanzprüfungen können auch vorgesehen werden, um nicht plausible und fehlerbehaftete Codes zu löschen. Bereits verwendete Codes werden vorzugsweise in einer Datenbank im Mobilgerät zwecks zukünftiger Kontrolle, statistischer Bewertungen und Backups gespeichert.

Eine weitere Leitung des Benutzers vom Standort des benannten Benutzers bis zum Produkt im Geschäft geschieht unter Verwendung des mit dem Mobilgerät direkt erfassten Identifizierungscodes oder der produktbetreffenden Daten des gesuchten Produkts. Steht das Mobilgerät mit RFID-Leser des Benutzers in der Reichweite des Produkts, wird das RFID-Element aktiviert. Durch eine Laufzeitmessung kann eine Entfernung zwischen Mobilgerät und Produkt ermittelt werden. Durch weitere Laufzeitmessungen mit anderen benachbarten RFID-Elementen können weitere Entfernungen ermittelt werden. Bilden Mobilgerät und zwei RFID-Elemente Dreiecke, können aus diesen triangulierenden entfernten Punkten zwei-dimensionale Koordinaten des Mobilgeräts relativ zu dem gesuchten Produkts bzw. eine Suchrichtung ermittelt werden. Insgesamt können also eine Entfernung und Richtung mittels des Mobilgeräts und zwei RFID-Elementen ermittelt werden.

Liegt das Mobilgerät mit dem RFID-Leser ausserhalb der Umgebung zur Aktivierung des gesuchten RFID-Elements, müssen andere Massnahmen in Betracht kommen. Eine direkte Verbindung zwischen dem Mobilgerät und dem gesuchten Element ist daher nicht möglich.

Es können unterschiedliche Identifizierungscodes mehrerer dem Mobilgerät nah gelegenen aktiven RFID-Elemente im Mobilgerät des Benutzers erfasst werden, die dem benannten Benutzer durch entsprechende Wiedergabemittel ermöglichen, anhand seines Mobilgeräts zum gesuchten Produkt zu finden. Eine Verbindung zwischen dem RFID-Leser und einem dieser Codes wird natürlich anzeigen, dass diese RFID-Elemente anderen Produkten als dem gesuchten Produkt entsprechen. Jedoch kann eine Laufzeitmessung zwischen dem Mobilgerät und einem oder mehreren dieser RFID-Elemente durchgeführt werden, auch wenn der EPC-Code uninteressant ist. Werden zwei derartige Laufzeitmessungen mit anderen RFID-Elementen durchgeführt, wird die zwei-dimensionale Position des Mobilgeräts relativ zu einem der - leider nicht gesuchten - RFID-Elemente ermittelt.

Dagegen kann eine Lokalisation des gesuchten RFID-Elements mittels eines Relais-basierten Netzes eingeleitet werden.

Als Relais-basiertes Netz kann ein autokonfigurierbares so genanntes Ad-Hoc-Netz mit vernetzbaren RFID-Elementen verwendet werden, indem mindestens aus einem der dem Mobilgerät nah gelegenen (d.h. aktivierbaren) RFID-Elementen eine Suche nach RFID-Elementen eingeleitet wird, bis dass das gesuchte RFID-Element aufgefunden wird. Die Topologie des Ad-Hoc-Netzes kann im Voraus dynamisch (z.B. durch vorläufige Laufzeitmessungen zwischen Netzelementen) ermittelt werden. Bei jedem Suchschritt von einem zu einem anderen RFID-Element können Laufzeitmessungen durchgeführt werden, so dass die Position eines überprüften RFID-Elements gegenüber einem anderen sowie zu einem dem Mobilgerät nahe gelegenen (d.h. aktivbaren) RFID-Element bekannt wird. Damit ist die zwei- oder drei-dimensionale Position, d.h. Entfernung und Richtung, des Mobilgeräts relativ zum aufgefundenen RFID-Element des gesuchten Produkts ermittelt. Insgesamt können immer relative Positionen des Mobilgeräts zu RFID-Elementen durch triangulierte Laufzeitmessungen (zwischen Mobilgerät und RFID-Elementen im Nahbereich dieser RFID-Elemente sowie zwischen RFID-Elementen in deren Nahbereichen) ermittelt werden. Eine mögliche Methode ist z.B. eine Hop-by-Hop-Suche zwischen RFID-Elementen.

Bei bekannter relativer Position durch Erfassung von mehreren Laufzeitmesssignalen zwischen dem Mobilgerät und dem RFID-Element über das Ad-Hoc-Netz kann am Display des Mobilgerätes die Lage des gesuchten Produkts bzw. die Wegbeschreibung bis zum Produkt angezeigt werden.

Eine Alternative zur Suche eines dem Mobilgerät fern gelegenen (d.h. nicht direkt aktivierbaren) RFID-Element besteht darin, eine Verbindung des Mobilgeräts des Benutzers mit mindestens einem festbasierten Relais herzustellen, bei dem das gesuchte RFID-Element und dessen Position im Geschäft bekannt sind. Solche Relais können für ein Inventar sowie zur Kontrolle von Produktbewegungen im Geschäft verwendet werden. Die Kenntnis des RFID-Elements sowie deren Position kann durch eine direkte Aktivierung des RFID-Elements aus dem Relais bzw. aus dem festbasierten Relais über weitere dazwischengelegene RFID-Elemente erfolgen. Steht nun das Mobilgerät in Verbindung mit dem Relais, reichen eine Laufzeitmessung zwischen dem Mobilgerät und dem Relais sowie eine weitere Laufzeitmessung mit einem beliebigen RFID-Element, um die Lage des Mobilgeräts gegenüber des gesuchten Produkts zu ermitteln.

Umfasst das Relais einen Router oder steht es mit einem Router in Verbindung, können mit grossem Vorteil vom festbasierten Relais ausgehende Daten der Lage des gesuchten Produkts im Geschäft an das Mobilgerät übermittelt werden. Mit anderen Worten übermittelt der Router z.B. eine WEB- oder eine WAP-Seite mit einer Wegbeschreibung zwischen gesuchtem Produkt und Mobilgerät, nachdem die oben beschriebene Lokalisierung des gesuchten Produkts relativ zum Mobilgerät erfolgte. Kennt der Router auch noch unbetretbare Stellen im Geschäft, kann eine genauere Wegbeschreibung mit einem möglichen bzw. optimierten Hilfsweg berechnet werden, indem der Kunde z.B. genau weiss, wann er zwischen zwei Regalen abbiegen muss. Dies ist besonders wichtig, wenn viele Wände oder lange Strecken zwischen Lagerorten kurze Strecken zum Produkt verunmöglichen. Relais können auch z.B. bei Treppen oder am Boden/an der Decke zwischen Etagen installiert werden, so dass eine Führung des Kunden bis zum Produkt über mehrere Etagen problemlos erfolgt. Wird ein RFID-Element auf einer Etage nicht gefunden, wird die Suche bei der nächsten Etage durchgeführt und so weiter. Pro Etage kann ebenfalls eine graphische Darstellung unbetretbarer Zonen des Geschäfts, (vorzugsweise bei Wänden, Regalen, Kassen usw.) aus einer HTML- oder PML-Seite des Geschäfts an das Mobilgerät versandt und am Display des Mobilgeräts als Hintergrund zur Wegbeschreibung dargestellt werden. Dazu können auch zwischen dem Mobilgerät und dem gesuchten Produkt auf einfache Weise Entfernungen, z.B. mit Text ("Sie sind noch 52 m weit vom RFID-Element entfernt") oder mit einer Füllleiste ("Sie haben 50% der zuerst angefragten Strecke absolviert") und Richtungen (z.B. mit Pfeilen oder einer Skizze des Weges) am Display des Mobilgeräts graphisch angezeigt bzw. akustisch wiedergegeben werden.

Möchte der Besitzer des Mobilgeräts im Geschäft eine Liste von Identifizierungscodes gesuchter Produkte im Mobilgerät erfassen, wird eine optimale Strecke z.B. mit minimaler bzw. optimierter Entfernung zwischen dem Benutzer und allen Standorten, an denen sich die Produkte befinden, z.B. aus einem Router oder aus einem Server des Geschäfts geladen. Ziel der Sache ist dabei, den Benutzer im Geschäft so schnell wie möglich bis zum Produkt zu leiten. Im Gegensatz dazu kann auch der Geschäftsführer gewünschte Leitungen der Kunden (z.B. an neuen Werbungsobjekten vorbei) in die berechnete Strecke zum gesuchten Produkt integrieren.

Bei einem Geschäft, in welchem Produkte nach Kategorien geordnet sind, kann z.B. eine Suche nach Produkten gemäss diesen Kategorien erfolgen, d.h. ein EPC-Code einer Kategorie wird vom Kunden erfasst oder dem Kunden aus einem Menü vorgeschlagen. Dies ist besonders praktisch, falls der Kunde einen einfachen Überblick über eine Kategorie von Produkten erhalten möchte. Weitere selektivere Codes zu einer Kategorie von Produkten können am Ort der Kategorie (von Produkten) im Mobilgerät erfasst oder betätigt werden und weiterhin kann der Kunde anhand von selektiveren Aktivierungen von RFID-Elementen oder mittels geographischen Daten weiterer produktbetreffenden Daten immer selektiver zu einem gesuchten oder plötzlich anderen gewünschten Produkt gehen. Eine solche Suche kann am einfachsten beim herumgehen des Kunden im Geschäft durch progressive Kategorien bezogener Aktivierungen von EPC-Codes durchgeführt werden. Eine Produktkategorie bezogener Aktivierungen von EPC-Codes kann ebenfalls durch ein Ad-Hoc-Netz zwischen EPC-Codes für Kategorien von Produkten erfolgen. Mit anderen Worten, kann aus dem EPC-Code eines Produkts eine Produktkategorie und deren EPC-Code hergeleitet werden. Ferner kann ein Server (z.B. in Verbindung mit im Geschäft verteilten Relais zur Überwachung der RFID-Elemente) alle Standorte von Kategorien von RFID-Elementen bis hin zum Standort eines einzelnen RFID-Elements eines Produkts verwalten. Gibt es im Geschäft keine Zuordnung von Produkten nach Kategorien, wird ein isoliertes gesuchtes Produkt trotzdem aufgefunden.

Bei dem erfindungsgemässen Verfahren ist also die Suche eines Produkts in einem Geschäft möglich, auch falls es sich nicht an der richtigen Stelle befindet. Dies bedeutet ebenfalls, dass die Geschäftslogistik bezüglich der Zuordnung von Produkten stark vereinfacht wird. Im Fall von fehlender Zuordnung von Produkten im Geschäft kann trotzdem eine gute Übersicht z.B. zum Inventar oder allgemein zur Kontrolle von vorhandenen oder verkauften Produkten gewährleistet werden. Das Bedienungspersonal des Geschäfts kann mittels eines Mobilgeräts einen Kunden ohne Mobilgerät jeweils informieren, wo er genau hingehen muss, damit er sein Produkt am schnellsten findet. Das Verfahren eignet sich sehr gut für ein Geschäft, bei welchem viele Produktbewegungen notwendig sind, viele unterschiedliche jedoch schwer unterscheidbare Produktsorten angeboten werden oder Produkte auf völlig zufällige Weise hingestellt sind.

Von zu Hause aus, bei Freunden, an der Arbeit, auf der Strasse oder in einem Geschäft kann ein potentieller Kunde mit seinem Mobilgerät mittels Erfassung eines Identifizierungscodes eines gewünschten Produkts (oder mehrerer Produkte) einen Verfügbarkeitstest (z.B. Verfügbarkeit, Anzahl von freien Stücken) durchführen, falls über das Mobilnetz und z.B. aus einer PML-Seite des Geschäft aktualisierte Inventardaten ihm zur Verfügung stehen. Ist der Verfügbarkeitstest positiv, kann zusätzlich eine Reservierung des gewünschten Produkts z.B. aus dem Mobilgerät oder aus einer anderen Kommunikationseinheit z.B. mit Abfragemenü der PML-Seite durchgeführt werden. Die Reservierung kann beispielsweise ferner durch eine Vorauszahlung per Mobilgerät erfolgen.

## Patentansprüche

1. Verfahren zur Leitung eines Benutzers eines Mobilgerätes (2) von einem Standort aus bis zu einem Produkt (1), mit folgenden Schritten:
- ein Identifizierungscode (1.1, 1.2) einer Kategorie des Produkts (1) wird im Mobilgerät (2) erfasst und an einen Namenserver (5.2) übermittelt,
- der Identifizierungscode wird im Namenserver (5.2) verwendet, um produktbetreffende Daten, die die Kategorie des benannten Produkts (1) betreffen, ins Mobilgerät (2) zu laden, wobei die benannten produktbetreffenden Daten einen geographischen Standort, an dem die Produktekategorie bezogen werden kann, umfassen, wobei
sich der benannte Benutzer an den benannten geographischen Standort begibt,
wobei eine kontaktlose Verbindung zwischen dem benannten Mobilgerät (2) und einem RFID-Element (1.1), mit welchem ein benanntes Produkt (1) der benannten Kategorie markiert ist, unter Nutzung desselben Identifizierungscodes oder von vom Namenserver (5.2) vorgängig gelieferten produktbetreffenden Daten aufgebaut wird, indem wenigstens das benannte RFID-Element (1.1) aktiviert wird,
Ermittelung einer Entfernung und einer Richtung zwischen dem Mobilgerät (2) und dem Produkt (1),
Leitung des Benutzers zum Produkt (1), wobei die Entfernung und Richtung vom Mobilgerät (2) zum Produkt (1) am Display des Mobilgeräts (2) graphisch angezeigt bzw. akustisch wiedergegeben werden und
ein weiteres Produkt (1) mit einem Kode der Kategorie wird vom Mobilgerät (2) aktiviert und der Benutzer wird zu dem weiteren Produkt (1) geleitet.

2. Verfahren nach Anspruch 1, wobei das Mobilgerät (2) eine Nummer, einen Barcode oder einen EPC-Code erfassen kann.

3. Verfahren nach Anspruch 1 oder 2, wobei Verbindungen zwischen dem Mobilgerät (2) und dem Namenserver (5.2) über ein Kommunikationsnetz, vorzugsweise ein Mobilnetz (6), erfolgen.

4. Verfahren nach einem der Ansprüche 1 bis 3, wobei bei fehlender direkter Verbindung zwischen dem Mobilgerät (2) und dem RFID-Element (1.1) des gesuchten Produkts eine Lokalisation des gesuchten RFID-Elements (1.1) mittels eines Relais-basierten Netzes eingeleitet wird.

5. Verfahren nach Anspruch 4, bei welchem als Relais-basiertes Netz ein autokonfigurierbares so genanntes Ad-Hoc-Netz mit vernetzbaren RFID-Elementen (1.1) verwendet wird.

6. Verfahren nach Anspruch 5, wobei eine relative Position des Mobilgeräts (2) zu RFID-Elementen (1.1) durch triangulierte Laufzeitmessungen ermittelt wird.

7. Verfahren nach einem der Ansprüche 5, 6 oder 7, wobei eine Verbindung des Mobilgeräts (2) des Benutzers mit mindestens einem festbasiertem Relais hergestellt wird, bei dem das gesuchte RFID-Element (1) und dessen Position im Geschäft bekannt sind.

8. Verfahren nach Anspruch 7, wobei das Relais einen Router umfasst oder mit einem Router verbunden ist,
welcher Daten zur Orientierung bis zum gesuchten Produkt im Geschäft an das Mobilgerät (2) übermittelt und,
der ggf. bei Kenntnis der Position des Mobilgeräts (2) einen Hilfsweg zwischen dem Mobilgerät (2) und dem gesuchten Produkt berechnet und dem Mobilgerät (2), vorzugsweise als WEB- oder WAP-Seite, übermittelt.

9. Verfahren nach einem der Ansprüche 1 bis 8, bei welchem zwischen dem Mobilgerät (2) und dem gesuchten Produkt Entfernungen mit Text oder Füllleisten und Richtungen. mit Pfeilen oder einer Skizze des Weges am Display des Mobilgeräts (2) graphisch angezeigt bzw. akustisch wiedergegeben werden.

## Claims

1. Method for directing a user of a mobile device (2) from a current location to a product (1), with the following steps:
an identification code (1.1, 1.2) of a category of the product (1) is recorded in the mobile device (2) and transmitted to a name server (5.2),
the identification code is used in the name server (5.2) to download product-related data which relate to the category of the product (1) into the mobile device (2), wherein said product-related data include a geographical location at which the category of the product can be bought, wherein
said user goes to said geographical location,
wherein a contactless connection is established between said mobile device (2) and a RFID-Element (1.1) with which said product (1) of said category is marked, by using the same identification code or product-related data previously supplied by the name server (5.2) by activating at least said RFID-Element (1.1),
determining a distance and a direction between the mobile device (2) and the product (1),
guiding the user to the product (1), wherein the distance and direction from the mobile device (2) to the product (1) is graphically displayed at the display of the mobile device (2) or is reproduced acoustically and
a further product (1) with a code of the category is activated by the mobile device (2) and the user is guided to the further product (1).

2. Method according to claim 1, wherein the mobile device (2) can record a number, a barcode or an EPC code.

3. Method according to claim 1 or 2, wherein connections between the mobile device (2) and the name server (5.2) occur over a communication network, preferably a mobile network (6).

4. Method according to one of claims 1 to 3, wherein if there is no direct connection between the mobile device (2) and the RFID element (1.1) of the sought product, a localizing of the sought RFID element (1.1) is initiated by means of a relay-based network.

5. Method according to claim 4, wherein as relay-based network a so-called ad-hoc network capable of being self configured with linkable RFID elements (1.1) is used.

6. Method according to claim 5, wherein a relative position of the mobile device (2) to RFID elements (1.1) is determined through triangulated running time measurements.

7. Method according to claim 5 or 6, wherein a connection of the user's mobile device (2) with at least one fixed-based relay is established, where the sought RFID element and its position in the shop are known.

8. Method according to claim 7, wherein the relay includes a router or is connected with a router,
that transmits data for orienting towards the sought product in the shop to the mobile device (2) and,
that if necessary, if knowing the position of the mobile device (2), computes and sends to the mobile device (2), preferably as WEB or WAP page, an auxiliary route between the mobile device (2) and the sought product.

9. Method according to one of claims 1 to 8, wherein distances between the mobile device (2) and the sought product, with text or with a gauge bar, and directions with arrows or a diagram of the route, are shown graphically on the display of the mobile device (2) or reproduced acoustically.

## Revendications

1. Méthode pour diriger un utilisateur d'un dispositif mobile (2) à partir d'un emplacement jusqu'à un produit (1), avec les étapes suivantes :
un code d'identification (1.1, 1.2) d'une catégorie du produit (1) est enregistré dans le dispositif mobile (2) et transmis à un serveur de noms (5.2),
le code d'identification est utilisé dans le serveur de noms (5.2) pour télécharger des données relatives au produit qui correspondent à la catégorie dudit produit (1) dans ledit dispositif mobile (2), selon lequel lesdites données relatives au produit comprennent un emplacement géographique auquel la catégorie de produit peut être achetée, selon laquelle
ledit utilisateur se rend audit emplacement géographique,
selon laquelle une liaison sans fil est établie entre ledit dispositif mobile (2) et un élément RFID (1.1), avec lequel un dit produit (1) de ladite catégorie est marqué, en utilisant les mêmes codes d'identification ou des données relatives au produit fournies précédemment par le serveur de noms (5.2), dans laquelle au moins ledit élément RFID (1.1) est activé,
détermination d'une distance et d'une direction entre le dispositif mobile (2) et le produit (1),
direction de l'utilisateur vers le produit (1), selon laquelle la distance et la direction du dispositif mobile (2) au produit (1) sont représentées graphiquement sur l'écran du dispositif mobile (2) ou acoustiquement et
un autre produit (1) avec un code de la catégorie est activé par le dispositif mobile (2) et l'utilisateur est dirigé vers l'autre produit (1).

2. Méthode selon la revendication 1, selon laquelle le dispositif mobile (2) peut enregistrer un numéro, un code-barres ou un code EPC.

3. Méthode selon la revendication 1 ou 2, selon laquelle des connections entre le dispositif mobile (2) et le serveur de noms (5.2) ont lieu dans un réseau de communication, de préférence un réseau de téléphonie mobile (6).

4. Méthode selon l'une des revendications 1 à 3, selon laquelle en cas de liaison directe défectueuse entre le dispositif mobile (2) et l'élément RFID (1.1) du produit recherché, une localisation dudit élément RFID recherché (1.1) est initiée au moyen d'un réseau basé sur des relais.

5. Méthode selon la revendication 4, selon laquelle comme réseau basé sur des relais un réseau auto-configurable ainsi nommé réseau ad-hoc avec des éléments RFID pouvant être liés (1.1) est utilisé.

6. Méthode selon la revendication 5, selon laquelle une position relative du dispositif mobile (2) aux éléments RFID (1.1) est déterminée par des mesures de temps écoulé triangulées.

7. Méthode selon la revendication 5 ou 6, selon laquelle une connexion du dispositif mobile (2) de l'utilisateur est établie avec au moins un relais fixe, dans lequel l'élément RFID recherché (1) et sa position dans le magasin sont connus.

8. Méthode selon la revendication 7, selon laquelle le relais comprend un routeur ou est connecté à un routeur,
lequel transmet au dispositif mobile (2) des données pour l'orientation dans le magasin jusqu'au produit recherché et,
le cas échéant s'il connait la position du dispositif mobile (2), calcule un trajet auxiliaire entre le dispositif mobile (2) et le produit recherché, et le transmet au dispositif mobile (2), de préférence comme page WEB ou WAP.

9. Méthode selon l'une des revendications 1 à 8, selon laquelle entre le dispositif mobile (2) et l'objet recherché sont représentées graphiquement les distances par du texte ou une barre de jauge et les directions par des flèches ou un croquis du chemin sur l'écran du dispositif mobile (2) ou reproduites acoustiquement.
